# EUROPEAN PATENT APPLICATION

(11) **EP 2 560 337 A1**
(43) Date of publication of application: **20.02.2013**
(21) Application number: 10851259.1
(22) Date of filing: 13.08.2010
(51) Int. Cl.: H04L 29/06, H04L 12/56, H04B 5/00

(54) **METHOD AND SYSTEM FOR REALIZING WIRELESS USB FLASH DISK**

(30) Priority: 11.05.2010 CN 201010174774
(71) Applicant: ZTE Corporation, Shenzhen, Guangdong 518057 (CN)
(72) Inventor: LI, Bin, Shenzhen Guangdong 518057 (CN); ZHANG, Zhiping, Shenzhen Guangdong 518057 (CN); FU, Qihong, Shenzhen Guangdong 518057 (CN)
(74) Representative: Kling, Simone
(86) International application number: PCT/CN2010/075998
(87) International publication number: WO 2011/140754

(57) **Abstract**

The disclosure discloses a realizing method and system for taking a mobile terminal as a wireless Universal Serial Bus (USB) flash disk. A client sends a Server Message Block (SMB) protocol data packet as an access request to a mobile terminal in a Bluetooth way after establishing a Logical Link Control and Adaptation Protocol (L2CAP) link with the mobile terminal; the mobile terminal executes the received SMB data packet and sends the SMB data packet as the access result to the client in a Bluetooth way; and the client displays the received access result. The method, device and system for realizing the wireless USB flash disk can take a mobile terminal as a wireless USB flash disk without any additional cable by combining the SMB protocol with the Bluetooth technology and using the mutual conversion between the SMB data packet and the L2CAP data packet, thereby being convenient to users.

## Description

### TECHNICAL FIELD

The disclosure relates to the field of data communication, in particular to a realization method and system for taking a mobile terminal as a wireless Universal Serial Bus (USB) flash disk.

### BACKGROUND

With the application requirements of people and the development of technologies, the storage capacity of mobile terminal, such as mobile phone, is larger and larger, and is expanded by the producers of the mobile terminal by a storage card, such as Transflash (TF) card; and with the constantly-expanded storage capacity, the mobile terminal can serve as a USB flash disk to store more data and switch pictures, video, documents and the like with a computer.

At present, the mobile terminal is connected with a computer by a data cable to switch data as a USB flash disk, i.e., an additional data cable is needed besides the mobile terminal; in addition, cables matched by different producers have different standards, which result in inconvenient to users.

### SUMMARY

One of the objectives of the disclosure is to provide a method and system for taking a mobile terminal as a wireless USB flash disk, so as to avoid the inconvenience caused by additional cables.

In order to achieve the objective, the solution of the disclosure is implemented as follows:
a mobile terminal, may include:
   a file sharing server end module which is configured to execute a data packet of access request from a client, and return a Server Message Block (SMB) protocol data packet as access result;
   a Bluetooth module which is configured to receive a Logical Link Control and Adaptation Protocol (L2CAP) data packet from the accessing client and send an L2CAP data packet to the client; and
   a data encapsulation and conversion module which is configured to convert the L2CAP data packet received by the Bluetooth module into the SMB data packet, and convert the SMB data packet as the access result into the L2CAP data packet sent by the Bluetooth module.

The data encapsulation and conversion module mat include:
a Transmission Control Protocol (TCP) data encapsulation sub-module which is configured to encapsulate the SMB data packet, which is regarded as the access result, as a TCP data packet;
an Internet Protocol (IP) data encapsulation sub-module which is configured to encapsulate the TCP data packet as an IP data packet; and
an L2CAP data conversion sub-module which is configured to convert the IP data packet into the L2CAP data packet sent by the Bluetooth module.

The L2CAP data conversion sub-module may further configured to convert the L2CAP data packet received by the Bluetooth module into the IP data packet;
the IP data encapsulation sub-module is further configured to parse the IP data packet as the TCP data packet; and
the TCP data encapsulation sub-module is further configured to parse the TCP data packet as the SMB data packet of the access request of the client.

A client, may include:
a file sharing client module which is configured to generate the SMB data packet as the access request to the mobile terminal and display the SMB data packet as the access result;
a Bluetooth module which is configured to send the L2CAP data packet to the mobile terminal and receive the L2CAP data packet from the mobile terminal; and
a data encapsulation and conversion module which is configured to convert the SMB data packet as the access request into the L2CAP data packet sent by the Bluetooth module and convert the L2CAP data packet received by the Bluetooth module into the SMB data packet as the access result.

The data encapsulation and conversion module may include:
a TCP data encapsulation sub-module which is configured to encapsulate the SMB data packet, which is regarded as the access request, as a TCP data packet;
an IP data encapsulation sub-module which is configured to encapsulate the TCP data packet as an IP data packet; and
an L2CAP data conversion sub-module which is configured to convert the IP data packet into the L2CAP data packet sent by the Bluetooth module.

The L2CAP data conversion sub-module may further be configured to convert the L2CAP data packet received by the Bluetooth module into the IP data packet;
the IP data encapsulation sub-module may further be configured to parse the IP data packet as the TCP data packet; and
the TCP data encapsulation sub-module may further be configured to parse the TCP data packet as the SMB data packet as the access result.

A method for realizing a wireless USB flash disk, may include:
a client sends SMB data packet as access request to a mobile terminal in a Bluetooth way after establishing an L2CAP link with the mobile terminal;
the mobile terminal executes the received data packet and sends the SMB data packet as access result to the client in a Bluetooth way; and
the client displays the received access result.

The client sends the SMB data packet as the access request to the mobile terminal in a Bluetooth way may include:
generating the SMB data packet as the access request by the client;
converting the SMB data packet as the access request into the L2CAP data packet; and
sending the L2CAP data packet to the mobile terminal.

Converting the SMB data packet as the access request into the L2CAP data packet may specifically include:
encapsulating the SMB data packet, which is regarded as the access request, as the TCP data packet;
encapsulating the TCP data packet as the IP data packet; and
converting the IP data packet into the L2CAP data packet.

The mobile terminal executing the received data packet and sending the SMB data packet as the access result to the client in a Bluetooth way may specifically include:
receiving, by the mobile terminal, the L2CAP data packet sent by the client;
converting the L2CAP data packet sent by the client into the SMB data packet as the access request;
executing the SMB data packet as the access request and returning the SMB data packet as the access result;
converting the SMB data packet as the access result into the L2CAP data packet; and
sending the L2CAP data packet to the client.

Converting the L2CAP data packet sent by the client into the SMB data packet as the access request may specifically include:
converting the L2CAP data packet sent by the client into the IP data packet; and
parsing the IP data packet as the TCP data packet; and
parsing the TCP data packet as the SMB data packet as the access request.

Converting the SMB data packet as the access result into the L2CAP data packet may specifically include:
encapsulating the SMB data packet, which is regarded as the access result, as the TCP data packet, and
encapsulating the TCP data packet as the IP data packet; and
converting the IP data packet into the L2CAP data packet.

The client displays the received access result may specifically include:
receiving, by the client, the L2CAP data packet sent by the mobile terminal;
converting the L2CAP data packet sent by the mobile terminal into the SMB data packet as the access result; and
loading the SMB data packet as the access result to a file system of the client in mode of independent disk or file tree.

Converting the L2CAP data packet sent by the mobile terminal into the SMB data packet as the access result may specifically include:
converting the L2CAP data packet sent by the mobile terminal into the IP data packet; and
parsing the IP data packet as the TCP data packet; and
parsing the TCP data packet as the SMB data packet as the access result.

A system for realizing a wireless USB flash disk, may include a client and a mobile terminal, wherein the client has established an L2CAP link with the mobile terminal,
the client may be configured to send the SMB data packet as the access request to the mobile terminal in a Bluetooth way and display the SMB data packet as access result returned from the mobile terminal; and
the mobile terminal may be configured to execute the data packet of the access request from the client and send the SMB data packet as the access result to the client in a Bluetooth way.

The client may include:
a file sharing client module which is configured to generate the SMB data packet as the access request to the mobile terminal and display the SMB data packet as the access result;
a first Bluetooth module which is configured to send the L2CAP data packet to the mobile terminal and receive the L2CAP data packet from the mobile terminal; and
a first data encapsulation and conversion module which is configured to convert the SMB data packet as the access request into the L2CAP data packet sent by the first Bluetooth module, and convert the L2CAP data packet received by the first Bluetooth module into the SMB data packet as the access result.

The mobile terminal may include:
a file sharing server end module which is configured to execute the SMB data packet of the access request from the client and return the SMB data packet as the access result;
a second Bluetooth module which is configured to receive the L2CAP data packet from the client and send the L2CAP data packet to the client; and
a second data encapsulation and conversion module which is configured to convert the L2CAP data packet received by the second Bluetooth module into the SMB data packet as the access request of the client, and convert the SMB data packet as the access result into the L2CAP data packet which is sent from the second Bluetooth module to the client.

The method, device and system for implementing the wireless USB flash disk can take a mobile terminal as a wireless USB flash disk without any additional cable by combining the SMB protocol with the Bluetooth technology and the mutual conversion between the SMB data packet and the L2CAP data packet, thereby being convenient to users.

### BRIEF DESCRIPTION OF THE DRAWINGS

Fig. 1 is a diagram showing the structure of a mobile terminal in one embodiment of the disclosure;
Fig. 2 is a diagram showing the structure of a data encapsulation and conversion module of a mobile terminal in another embodiment of the disclosure;
Fig. 3 is a diagram showing the structure of a client in one embodiment of the disclosure;
Fig. 4 is a diagram showing the structure of a data encapsulation and conversion module of a client in another embodiment of the disclosure;
Fig. 5 is a flowchart of a method for realizing a wireless USB flash disk in one embodiment of the disclosure; and
Fig. 6 is a diagram showing the structure of a system for realizing a wireless USB flash disk in one embodiment of the disclosure.

### DETAILED DESCRIPTION

The disclosure takes a mobile terminal as a wireless USB flash disc to use by combining Bluetooth technology and SMB protocol.

The Bluetooth technology is a short-distance radio technology and is an open standard of wireless data and voice transmission; the Bluetooth works at a frequency band of 2.4GHz to link various communication facilities, computers and their terminal equipment, various digital data systems, and even household appliances in a wireless way, and adopts a wireless interface instead of a wired cable connection, and has high portability and low power consumption.

Bluetooth protocol stack is the specification of a group of protocols defined by a Special Interest Group (SIG), and aims to enable mutual operation among Bluetooth devices following the specification. L2CAP is the core protocol of the Bluetooth protocol stack and is used in the Bluetooth protocol stack of a data link layer to provide connection or connectionless data services to a high-layer protocol by protocol multiplexing, segmenting and recombining operation, and manners like group abstraction; the L2CAP allows the high-layer protocol and applications to send and receive the L2CAP data packet, and establish different paths among different applications of the Bluetooth devices by the concept of a channel.

SMB protocol, which is developed by IBM and used for sharing files, printers, serial ports and the like among computers, is a client/server, request/response protocol. By the SMB protocol, client applications can read and write files on servers in various network environments and make a service request on a server program; and a client can access shared directories, open, read and write a file and perform other operation on a file system by sending an SMB command to a server.

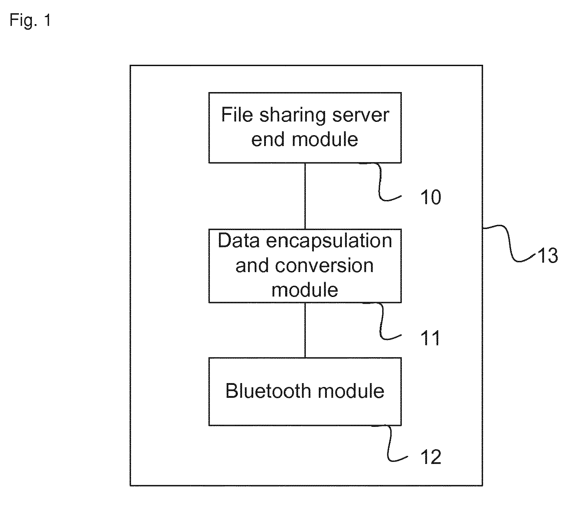

With reference to Fig. 1, a mobile terminal 13 in one embodiment of the disclosure is provided, including:
a file sharing server end module 10 which is configured to execute the SMB data packet of the access request from a client and return SMB data packet as access result;
a Bluetooth module 12 which is configured to receive the L2CAP data packet from the accessing client and send the L2CAP data packet to the client; and
a data encapsulation and conversion module 11 which is configured to convert the L2CAP data packet received by Bluetooth module 12 into the SMB data packet and convert the access result into L2CAP data packet sent by the Bluetooth module 12.

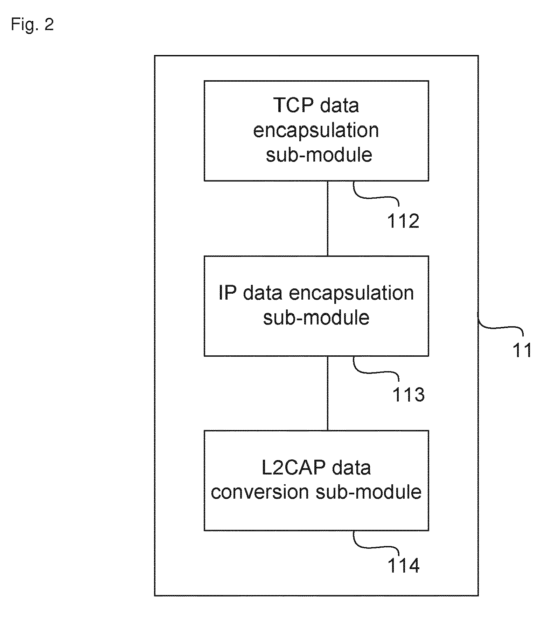

With reference to Fig. 2, the data encapsulation and conversion module 11 includes:
a TCP data encapsulation sub-module 112 which is configured to encapsulate the SMB data packet, which is regarded as the access result, as a TCP data packet;
an IP data encapsulation sub-module 113 which is configured to encapsulate the TCP data packet as an IP data packet; and
an L2CAP data conversion sub-module 114 which is configured to convert the IP data packet into the L2CAP data packet sent by the Bluetooth module 12.

In the data encapsulation and conversion module 11, the L2CAP data conversion sub-module 114 is further configured to convert the L2CAP data packet received by the Bluetooth module 12 into the IP data packet; the IP data encapsulation sub-module 113 is further configured to parse the IP data packet as the TCP data packet; and the TCP data encapsulation sub-module 112 is further configured to parse the TCP data packet as the SMB data packet which is regarded as the access request of the client.

In the embodiment, after mobile terminal 13 establishes an L2CAP link with a client, the client sends an access request, which is sent to the mobile terminal 13 by the L2CAP data packet suitable for Bluetooth transmission, to the mobile terminal 13; and the mobile terminal 13, after making a response to the access request, i.e., executing the access request, feeds access result back to the client to realize sharing operation to the mobile terminal 13 by the client. The process that the mobile terminal 13 parses the L2CAP data packet sent by the client as the SMB data packet which can be executed by the file sharing server end module 10 includes: the Bluetooth module 12 receives the L2CAP data packet from the client; the data encapsulation and conversion module 11 converts the L2CAP data packet into the SMB data packet which can be executed by the file sharing server end module 10, and the file sharing server end module 10 executes the SMB data packet and generates an SMB data packet for realizing the access.

The process that the data encapsulation and conversion module 11 converts the L2CAP data packet into the SMB data packet which can be executed by the file sharing server end module 10 includes:
the L2CAP data conversion sub-module 114 converts the L2CAP data packet into the IP data packet; then, the IP data encapsulation sub-module 113 parses the IP data packet as the TCP data packet, and the TCP data encapsulation sub-module 112 parses the TCP data packet as the SMB data packet of the access request which can be executed by the file sharing server end module 10.

Similarly, when the mobile terminal 13 feeds back the SMB data packet as the access result, the file sharing server end module 10 generates and sends the SMB data packet as the access result to the data encapsulation and conversion module 11; then, the data encapsulation and conversion module 11 converts the SMB data packet into the L2CAP data packet; and the Bluetooth module 12 converts the L2CAP data packet into a radio frequency signal for transmission.

The process that the data encapsulation and conversion module 11 converts the SMB data packet into the L2CAP data packet includes:
the TCP data encapsulation sub-module 112 encapsulates the SMB data packet, which is regarded as the access result, as the TCP data packet, then, the IP data encapsulation sub-module 113 encapsulates the TCP data packet as the IP data packet, and the L2CAP data conversion sub-module 114 converts the IP data packet into the L2CAP data packet.

To sum up, based on the bidirectional conversion between the SMB data packet and the L2CAP data packet, the mobile terminal 13 of the disclosure realizes sharing operation to the mobile terminal 13 by the client and successfully realizes the wireless USB flash disc without any additional cable.

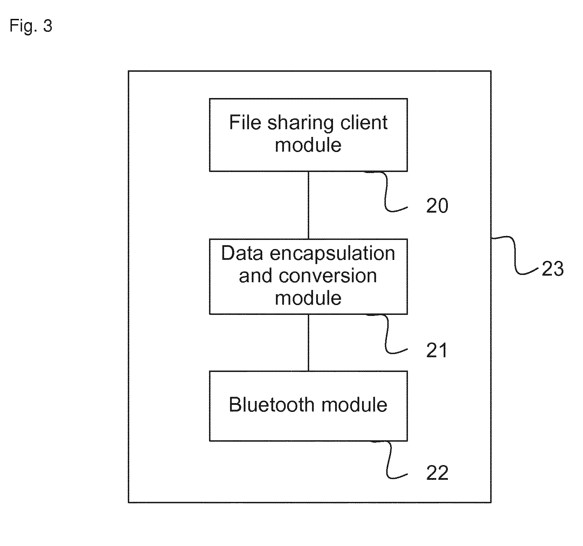

With reference to Fig. 3, a client 23 in one embodiment of the disclosure is provided, including:
a file sharing client module 20 which is configured to generate the SMB data packet as the access request to the mobile terminal and display the SMB data packet as the access result;
a Bluetooth module 22 which is configured to send the L2CAP data packet to the mobile terminal and receive the L2CAP data packet from the mobile terminal; and
a data encapsulation and conversion module 21 which is configured to convert the SMB data packet as the access request into the L2CAP data packet sent by the Bluetooth module 22, and convert the L2CAP data packet received by the Bluetooth module 22 into the SMB data packet as the access result.

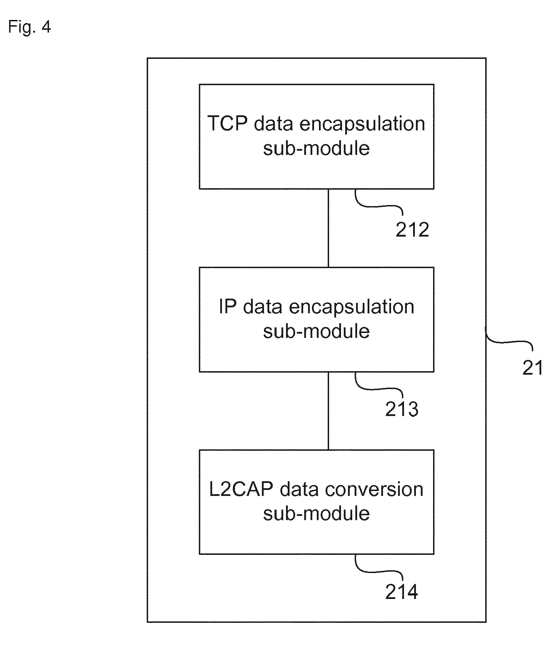

With reference to Fig. 4, the data encapsulation and conversion module 21 includes:
a TCP data encapsulation sub-module 212 which is configured to encapsulate the SMB data packet, which is regarded as the access request, as a TCP data packet;
an IP data encapsulation sub-module 213 which is configured to encapsulate the TCP data packet as an IP data packet; and
an L2CAP data conversion sub-module 214 which is configured to convert the IP data packet into the L2CAP data packet sent by the Bluetooth module 22.

The L2CAP data conversion sub-module 214 is further configured to convert the L2CAP data packet received by the Bluetooth module 22 into the IP data packet; the IP data encapsulation sub-module 213 is further configured to parse the IP data packet as the TCP data packet; and the TCP data encapsulation sub-module 212 is further configured to parse the TCP data packet as the SMB data packet as the access result.

In the embodiment, after establishing an L2CAP link with the mobile terminal, the client 23 sends an access request, which is sent to the mobile terminal by the L2CAP data packet suitable for Bluetooth transmission, to the mobile terminal; and the mobile terminal, after making a response to the access request, i.e., executing the access request, feeds the access result back to the client 23 to realize sharing operation to the mobile terminal by client 23. The process that the client 23 sends an access request to the mobile terminal and receives, displays and feeds back the result includes:
the file sharing client module 20 generates and sends the SMB data packet, which is regarded as the access request, to the data encapsulation and conversion module 21; then, the data encapsulation and conversion module 21 converts the SMB data packet as the L2CAP data packet; and the Bluetooth module 22 converts the L2CAP data packet as a radio frequency signal for transmission.

The process that the data encapsulation and conversion module 21 converts the SMB data packet, which is regarded as the access request, as the L2CAP data packet includes:
the TCP data encapsulation sub-module 212 encapsulates the SMB data packet, which is regarded as the access request, as the TCP data packet; then, the IP data encapsulation sub-module 213 encapsulates the TCP data packet as the IP data packet; and the L2CAP data conversion sub-module 214 converts the IP data packet into the L2CAP data packet.

Similarly, when the client 23 receives and displays the SMB data packet as the access result, the Bluetooth module 22 receives the radio frequency signal and converts it into the L2CAP data packet; the data encapsulation and conversion module 21 converts the L2CAP data packet into the SMB data packet; and the file sharing client module 20 loads the SMB data packet as the access result to a file system of the client 23 in mode of file tree or independent disk to realize sharing operation to the mobile terminal by the client 23.

The process that the data encapsulation and conversion module 21 converts the L2CAP data packet into the SMB data packet includes:
the L2CAP data conversion sub-module 214 converts the L2CAP data packet into the IP data packet; then, the IP data encapsulation sub-module 213 parses the IP data packet as the TCP data packet; and the TCP data encapsulation sub-module 212 parses the TCP data packet as the SMB data packet as the access result.

To sum up, based on the bidirectional conversion between the SMB data packet and the L2CAP data packet, the client 23 of the disclosure realizes sharing operation to the mobile terminal and successfully realizes the wireless USB flash disc without any additional cable.

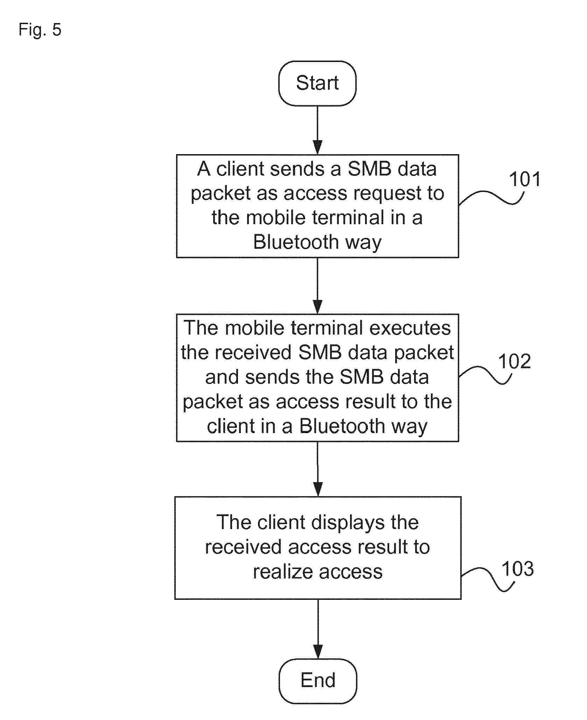

With reference to Fig. 5, a method for implementing a wireless USB flash disk in another embodiment of the disclosure is provided, including:
S101: after establishing an L2CAP link with a mobile terminal, the client sends the SMB data packet as the access request to the mobile terminal in a Bluetooth way,
   specifically:
   the client generates the SMB data packet as the access request;
   converts the SMB data packet as the access request into the L2CAP data packet; and
   sends the L2CAP data packet to the mobile terminal.

Wherein converts the SMB data packet as the access request into the L2CAP data packet specifically includes:
encapsulates the SMB data packet, which is regarded as the access request, as the TCP data packet;
encapsulates the TCP data packet as the IP data packet; and
converts the IP data packet into the L2CAP data packet.
S102: The mobile terminal executes the received SMB data packet and sends the SMB data packet as the access result to the client in a Bluetooth way,
   specifically:
   the mobile terminal receives the L2CAP data packet sent by the client;
   converts the L2CAP data packet sent by the client into the SMB data packet as the access request;
   executes the SMB data packet as the access request and returns the SMB data packet as the access result;
   converts the SMB data packet as the access result into the L2CAP data packet; and
   sends the L2CAP data packet to the client.

Wherein converts the L2CAP data packet sent by the client into the SMB data packet as the access request specifically includes:
converts the L2CAP data packet sent by the client into the IP data packet; and
parses the IP data packet as the TCP data packet; and
parses the TCP data packet as the SMB data packet as the access request.

Wherein converts the SMB data packet as the access result into the L2CAP data packet specifically includes:
encapsulates the SMB data packet, which is regarded as the access result, as the TCP data packet, and
encapsulates the TCP data packet as the IP data packet; and
converts the IP data packet into the L2CAP data packet.
S103: The client displays the received access result,
   specifically:
   the client receives the L2CAP data packet sent by the mobile terminal;
   converts the L2CAP data packet sent by the mobile terminal into the SMB data packet as the access result; and
   loads the SMB data packet as the access result to a file system of the client in mode of independent disk or file tree.

Wherein converts the L2CAP data packet sent by the mobile terminal into the SMB data packet as the access result specifically includes:
converts the L2CAP data packet sent by the mobile terminal into the IP data packet; and
parses the IP data packet as the TCP data packet; and
parses the TCP data packet as the SMB data packet as the access result.

To sum up, based on the bidirectional conversion between the SMB data packet and the L2CAP data packet, the method in the embodiment realizes sharing operation to the mobile terminal by the client and successfully realizes the wireless USB flash disc without any additional cable.

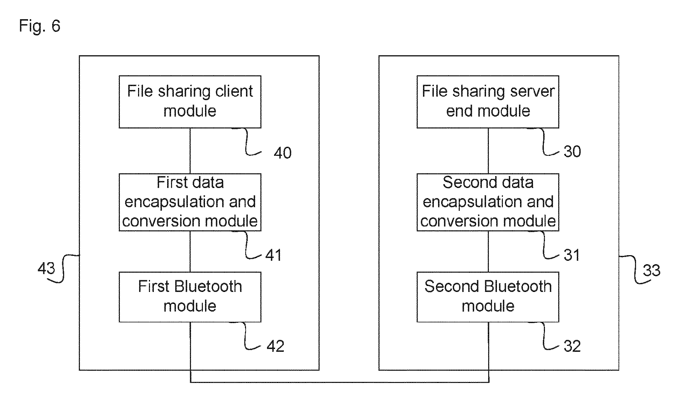

With reference to Fig. 6, a system for implementing a wireless USB flash disk in another embodiment of the disclosure is provided, including:
a client 43 and a mobile terminal 33, wherein the client 43 has established an L2CAP link with the mobile terminal 33, wherein
the client 43 is configured to send the SMB data packet as the access request to the mobile terminal 33 in a Bluetooth way and display the SMB data packet as the access result returned from the mobile terminal 33; and
the mobile terminal 33 is configured to execute the SMB data packet of the access request from the client 43 and send the SMB data packet as the access result to the client 43 in a Bluetooth way.

The client 43 includes:
a file sharing client module 40 which is configured to generate the SMB data packet as the access request to the mobile terminal and display the SMB data packet as the access result;
a first Bluetooth module 42 which is configured to send the L2CAP data packet to the mobile terminal 33 and receive the L2CAP data packet from the mobile terminal 33; and
a first data encapsulation and conversion module 41 which is configured to convert the SMB data packet as the access request into the L2CAP data packet sent by the first Bluetooth module 42, and convert the L2CAP data packet received by the first Bluetooth module 42 into the SMB data packet as the access result.

The mobile terminal 33 includes:
a file sharing server end module 30 which is configured to execute the SMB data packet of the access request from the client 43 and return the SMB data packet as the access result;
a second Bluetooth module 32 which is configured to receive the L2CAP data packet from the client 43 and send the L2CAP data packet to the client; and
a second data encapsulation and conversion module 31 which is configured to convert the L2CAP data packet received by the second Bluetooth module 32 into the SMB data packet as the access request of the client 43, and convert the SMB data packet as the access result into the L2CAP data packet sent by the second Bluetooth module 32.

In the embodiment, the working principle of the client 43 here is the same as that of the client 23 in the embodiment in Fig. 3; and the working principle of the mobile terminal 33 here is the same as that of the mobile terminal 13 in the embodiment in Fig. 1, thereby needing no further description.

In the system of the embodiment, the sharing operation to the mobile terminal 33 by the client 43 is based on the mutual conversion of the SMB data packet and the L2CAP data packet; and the SMB protocol and the Bluetooth technology are fully utilized to send the sharing operation command sent by the client 43 to the mobile terminal 33 in a Bluetooth way; and the mobile terminal 33 returns the access result in a Bluetooth way after execution. The system really realizes the wireless USB flash disk without any additional cable, so as to be very convenient to users.

What described above are only preferred embodiments of the disclosure and not intended to limit the patent scope of the disclosure; and all the changes of equivalent structure or equivalent flow made by the description and drawings of the disclosure, or directly or indirectly applied to other related technical fields, are within the patent protection scope of the disclosure.

## Claims

1. A mobile terminal, comprising:
a file sharing server end module which is configured to execute a data packet of access request from a client, and return a Server Message Block (SMB) protocol data packet as access result;
a Bluetooth module which is configured to receive a Logical Link Control and Adaptation Protocol (L2CAP) data packet from the accessing client and send an L2CAP data packet to the client; and
a data encapsulation and conversion module which is configured to convert the L2CAP data packet received by the Bluetooth module into the SMB data packet, and convert the SMB data packet as the access result into the L2CAP data packet sent by the Bluetooth module.

2. The mobile terminal according to claim 1, wherein the data encapsulation and conversion module comprises:
a Transmission Control Protocol (TCP) data encapsulation sub-module which is configured to encapsulate the SMB data packet, which is regarded as the access result, as a TCP data packet;
an Internet Protocol (IP) data encapsulation sub-module which is configured to encapsulate the TCP data packet as an IP data packet; and
an L2CAP data conversion sub-module which is configured to convert the IP data packet into the L2CAP data packet sent by the Bluetooth module.

3. The mobile terminal according to claim 2, wherein
the L2CAP data conversion sub-module is further configured to convert the L2CAP data packet received by the Bluetooth module into the IP data packet;
the IP data encapsulation sub-module is further configured to parse the IP data packet as the TCP data packet; and
the TCP data encapsulation sub-module is further configured to parse the TCP data packet as the SMB data packet of the access request of the client.

4. A client, comprising:
a file sharing client module which is configured to generate the SMB data packet as the access request to the mobile terminal and display the SMB data packet as the access result;
a Bluetooth module which is configured to send the L2CAP data packet to the mobile terminal and receive the L2CAP data packet from the mobile terminal; and
a data encapsulation and conversion module which is configured to convert the SMB data packet as the access request into the L2CAP data packet sent by the Bluetooth module and convert the L2CAP data packet received by the Bluetooth module into the SMB data packet as the access result.

5. The client according to claim 4, wherein the data encapsulation and conversion module comprises:
a TCP data encapsulation sub-module which is configured to encapsulate the SMB data packet, which is regarded as the access request, as a TCP data packet;
an IP data encapsulation sub-module which is configured to encapsulate the TCP data packet as an IP data packet; and
an L2CAP data conversion sub-module which is configured to convert the IP data packet into the L2CAP data packet sent by the Bluetooth module.

6. The client according to claim 5, wherein
the L2CAP data conversion sub-module is further configured to convert the L2CAP data packet received by the Bluetooth module into the IP data packet;
the IP data encapsulation sub-module is further configured to parse the IP data packet as the TCP data packet; and
the TCP data encapsulation sub-module is further configured to parse the TCP data packet as the SMB data packet as the access result.

7. A method for realizing a wireless Universal Serial Bus (USB) flash disk, comprising:
sending, by a client, SMB data packet as access request to a mobile terminal in a Bluetooth way after the client and the mobile terminal establish an L2CAP link;
executing, by the mobile terminal, the received data packet and sending the SMB data packet as access result to the client in a Bluetooth way; and
displaying, by the client, the received access result.

8. The method for realizing a USB flash disk according to claim 7, wherein the client sending the SMB data packet as the access request to the mobile terminal in a Bluetooth way comprises:
generating the SMB data packet as the access request by the client;
converting the SMB data packet as the access request into the L2CAP data packet;
and
sending the L2CAP data packet to the mobile terminal.

9. The method for realizing a US flash disk according to claim 8, wherein converting the SMB data packet as the access request into the L2CAP data packet specifically comprises:
encapsulating the SMB data packet, which is regarded as the access request, as the TCP data packet;
encapsulating the TCP data packet as the IP data packet; and
converting the IP data packet into the L2CAP data packet.

10. The method for realizing a USB flash disk according to any one of claims 7 to 9, wherein the mobile terminal executing the received data packet and sending the SMB data packet as the access result to the client in a Bluetooth way specifically comprises:
receiving, by the mobile terminal, the L2CAP data packet sent by the client;
converting the L2CAP data packet sent by the client into the SMB data packet as the access request;
executing the SMB data packet as the access request and returning the SMB data packet as the access result;
converting the SMB data packet as the access result into the L2CAP data packet; and
sending the L2CAP data packet to the client.

11. The method for realizing a USB flash disk according to claim 10, wherein converting the L2CAP data packet sent by the client into the SMB data packet as the access request specifically comprises:
converting the L2CAP data packet sent by the client into the IP data packet; and
parsing the IP data packet as the TCP data packet; and
parsing the TCP data packet as the SMB data packet as the access request.

12. The method for realizing a USB flash disk according to claim 10, wherein converting the SMB data packet as the access result into the L2CAP data packet specifically comprises:
encapsulating the SMB data packet, which is regarded as the access result, as the TCP data packet, and
encapsulating the TCP data packet as the IP data packet; and
converting the IP data packet into the L2CAP data packet.

13. The method for realizing a USB flash disk according to claim 10, wherein the client displays the received access result specifically comprises:
receiving, by the client, the L2CAP data packet sent by the mobile terminal;
converting the L2CAP data packet sent by the mobile terminal into the SMB data packet as the access result; and
loading the SMB data packet as the access result to a file system of the client in mode of independent disk or file tree.

14. The method for realizing a USB flash disk according to claim 13, wherein converting the L2CAP data packet sent by the mobile terminal into the SMB data packet as the access result specifically comprises:
converting the L2CAP data packet sent by the mobile terminal into the IP data packet; and
parsing the IP data packet as the TCP data packet; and
parsing the TCP data packet as the SMB data packet as the access result.

15. A system for realizing a wireless USB flash disk, comprising a client and a mobile terminal, wherein the client has established an L2CAP link with the mobile terminal,
the client is configured to send SMB data packet as access request to the mobile terminal in a Bluetooth way and display the SMB data packet as access result returned from the mobile terminal; and
the mobile terminal is configured to execute the data packet of the access request from the client and send the SMB data packet as the access result to the client in a Bluetooth way.

16. The system for realizing a wireless USB flash disk according to claim 15, wherein the client comprises:
a file sharing client module which is configured to generate the SMB data packet as the access request to the mobile terminal and display the SMB data packet as the access result;
a first Bluetooth module which is configured to send the L2CAP data packet to the mobile terminal and receive the L2CAP data packet from the mobile terminal; and
a first data encapsulation and conversion module which is configured to convert the SMB data packet as the access request into the L2CAP data packet sent by the first Bluetooth module, and convert the L2CAP data packet received by the first Bluetooth module into the SMB data packet as the access result.

17. The system for realizing a wireless USB flash disk according to claim 15 or 16, wherein the mobile terminal comprises:
a file sharing server end module which is configured to execute the SMB data packet of the access request from the client and return the SMB data packet as the access result;
a second Bluetooth module which is configured to receive the L2CAP data packet from the client and send the L2CAP data packet to the client; and
a second data encapsulation and conversion module which is configured to convert the L2CAP data packet received by the second Bluetooth module into the SMB data packet as the access request of the client, and convert the SMB data packet as the access result into the L2CAP data packet which is sent from the second Bluetooth module to the client.
